# EUROPÄISCHE PATENTSCHRIFT

(11) **EP 2 972 111 B1**
(45) Veröffentlichungstag und Bekanntmachung des Hinweises auf die Patenterteilung: **26.12.2018**
(21) Anmeldenummer: 14717074.0
(22) Anmeldetag: 08.03.2014
(51) Int. Cl.: G01D 5/347

(54) **VERFAHREN ZUM AUFBRINGEN EINER STRUKTUR AUF EIN ELEMENT, INSBESONDERE AUF EIN ELEMENT EINES WINKELMESSSYSTEMS**
METHOD OF APPLYING A STRUCTURE ON AN ELEMENT, IN PARTICULAR ON AN ELEMENT OF AN ANGLE MEASURING SYSTEM
PROCÉDÉ D'APPLICATION D'UNE STRUCTURE SUR UN ÉLÉMENT, NOTAMMENT SUR UN ÉLÉMENT D'UN SYSTÈME DE MESURE ANGULAIRE

(30) Priorität: 10.03.2013 DE 102013004156
(43) Veröffentlichungstag der Anmeldung: 20.01.2016
(73) Patentinhaber: Hoche, Randolf Karl, 85748 Garching (DE)
(72) Erfinder: Hoche, Randolf Karl, 85748 Garching (DE)
(74) Vertreter: Seifert, Ruth
(86) Internationale Anmeldenummer: PCT/IB2014/059549
(87) Internationale Veröffentlichungsnummer: WO 2014/141025

(56) Entgegenhaltungen:
- EP-A1- 1 903 316
- EP-A2- 0 048 487
- DE-A1- 10 019 499

## Beschreibung

Vorliegende Erfindung betrifft ein Verfahren zum Aufbringen einer Struktur, insbesondere einer Markierung und/oder Beschriftung auf mindestens ein Element mit einem Markierungssystem, sowie ein Verfahren zum Herstellen eines Winkelmesssystems oder eines Bauteils eines Winkelmessystems, und ein mittels dieses Verfahrens hergestelltes Winkelmesssystem oder Bauteil eines Winkelmesssystems.

Insbesondere bei Winkelmesssystemen müssen die zur Bestimmung des Winkels benutzten Skalen mit großer Präzision aufgebracht werden. Aus dem Stand der Technik, insbesondere aus der DE 100 19 499, ist ein Beschriftungsverfahren bekannt, bei dem ein Signalträger in einer Beschriftungsvorrichtung mit einer Rotationsachse befestigt wird und der Signalträger um die Rotationsachse rotiert wird. Dabei wird eine Exzentrizität des Signalträgerzentrums relativ zur Rotationsachse erfasst und beim Aufbringen der Markierung korrigierend berücksichtigt.

Ebenfalls aus dem Stand der Technik, beispielsweise der DE 10 2005 021 504 ist bekannt, den mit einer Markierung zu versehenen Körper an einer Trägervorrichtung des Beschriftungssystems zu justieren, wobei die Justage über das gegeneinander Ausrichten von Markierungen auf dem Körper und der Trägervorrichtung erfolgt.
EP 0 048 487 A2 offenbart ein Verfahren zur Herstellung einer Codescheibe für optische Winkelschrittgeber bzw. Winkelcodierer, wobei lichtdurchlässige Codierspuren als Codemuster durch partielles Entfernen einer auf die Codescheibe aufgebrachten lichtundurchlässigen Schicht erzeugt werden. Die Codescheibe wird dabei bereits vor Aufbringen des Codemusters auf einer gelagerten Welle montiert. Danach wird das Codemuster mit einem Laserstrahlsender in die Oberfläche der Codescheibe eingebrannt. Die Codescheibe wird dabei über eine Winkelschrittsteuerung jeweils genau gegenüber dem Laserstrahlsender positioniert.

Nachteilig bei den bekannten Verfahren ist jedoch, dass zwar die Exzentrizität des Signalträgers bzw. des mit der Beschriftung zu versehenen Elements gegenüber der Referenzachse des Beschriftungssystems berücksichtigt wird, das Element jedoch nach dem Beschriften an dem Winkelmesssystem montiert wird, das ebenfalls Fertigungstoleranzen bzw. Unwuchten aufweisen kann. Dies wiederum führt zu einer Ungenauigkeit bei einer Weg- bzw. Winkelmessung, da die Fertigungstoleranzen oder auch die Rundlaufabweichung der Lagerung des Winkelmesssystems selbst nicht berücksichtigt wurde.

Um diesen Problemen wiederum zu begegnen, müssen die Winkelmesssysteme selbst höchst präzise gefertigt werden, was sehr teuer und sehr aufwändig ist.

Aufgabe vorliegender Erfindung ist es deshalb, ein vereinfachtes Verfahren zum Herstellen einer Struktur auf einem Element, insbesondere auf einem Element für ein Winkelmesssystem bereitzustellen, dass präzise Mesungen zulässt.

Diese Aufgabe wird durch ein Verfahren zum Aufbringen einer Struktur gemäß Patentanspruch 1 oder ein Verfahren zum Herstellen eines Winkelmesssystems oder Bauteils eines Winkelmessystems gemäß Patentanspruch 12 gelöst.

Unter einem Bauteil wird dabei ein einteiliges oder ein mehrteiliges Bauteil verstanden.

Erfindungsgemäß wird ein Verfahren zum Aufbringen einer Struktur, insbesondere einer Markierung und/oder einer Beschriftung, auf mindestens ein Element mit einem Markierungssystem, insbesondere einem Lasersystem vorgestellt, wobei das mindestens eine Element bezüglich einer Welle angeordnet ist. Dabei basiert die Erfindung auf der Idee, in einem ersten Schritt a) die Welle, auf der später das Element angeordnet bzw. befestigt wird und/oder die Welle zusammen mit dem bezüglich der Welle angeordneten Element in dem Markierungssystem anzuordnen. In einem zweiten Schritt b) wird eine Lage, vorzugsweise ein Drehpunkt, der Welle in Relation zu einem Referenzpunkt, vorzugsweise einem Nullpunkt, des Markierungssystems, bestimmt und erst dann in Schritt c) eine Struktur auf das bezüglich der Welle angeordneten Elements aufgebracht. Dadurch wird nicht wie im Stand der Technik die Exzentrizität des Elements selbst, sondern die Lage der Welle, vorzugsweise aber dessen Drehpunkt bezüglich der das Element angeordnet werden soll, bestimmt, so dass Fertigungsungenauigkeiten verringert und Rundlaufungenauigkeiten der Wellenlagerung mit berücksichtigt werden. Da zudem das Element bereits an seiner Zusammenbauposition ist, während die Struktur aufgebracht wird, kann so die Herstellung des Winkelmesssystems signifikant vereinfacht werden.

Gemäß einem weiteren vorteilhaften Ausführungsbeispiel des erfindungsgemäßen Verfahrens erfolgt das Aufbringen der Struktur unter Berücksichtigung der Bestimmung der Lage und/oder des Drehpunkts der Welle. Das bedeutet, dass im Gegensatz zum Stand der Technik, bei dem eine Exzentrizität des Elements ausschlaggebend für die Korrekturwerte beim Aufbringen der Struktur ist, diese Exzentrizität des Elements im erfindungsgemäßen Verfahren beim Aufbringen der Struktur vollkommen unberücksichtigt bleibt und lediglich die Lage bzw. der Drehpunkt der Welle von Interesse ist. Dies ist insbesondere deshalb möglich, da das Element nicht an einer anderen Welle angeordnet werden muss, sondern an der vermessenen Welle verbleibt.

Gemäß einem weiteren vorteilhaften Ausführungsbeispiel verbleibt die Welle und/oder die Welle mit dem bezüglich der Welle angeordneten Element während aller nach Schritt a) folgenden Schritte in dem Markierungssystem. Vorteilhafterweise kann dadurch weiter die Präzision erhöht werden, da Fehlerquellen aufgrund von Demontage der Welle aus dem Markierungssystem vermieden werden. Gleichzeitig kann dadurch das Verfahren vereinfacht werden, da die Lage der Welle nicht nochmals vermessen werden muss.

Gemäß einem weiteren vorteilhaften Ausführungsbeispiel wird insbesondere zur Bestimmung der Relation von Lage und/oder Drehpunkt der Welle zu einem Referenzpunkt des Markierungssystems ein Messkörper verwendet, der vorzugsweise formschlüssig auf die Welle aufgesetzt wird. Mittels dieses erfindungsgemäßen Messkörpers kann die Lage bzw. der Drehpunkt der Welle bezüglich eines Referenzpunkts des Markierungssystems eindeutig bestimmt werden. Dazu kann der Messkörper als aktiver und/oder passiver Messkörper ausgebildet sein. Als ein aktiver Messkörper kann beispielsweise ein Sensor betrachtet werden, der Signale zur Verfügung stellt, die verwendet werden können um (aktiv) die Lage der Welle zu bestimmen und die gemessenen Signale beispielsweise an das Markierungssystem direkt und/oder auch an ein Steuersystem sendet, das wiederum mit dem Markierungssystem verbunden ist.

Alternativ oder zusätzlich kann auch ein passiver Messkörper verwendet werden, der vorzugsweise mittels des Markierungssystems vermessen wird, wodurch wiederum die Lage bzw. der Drehpunkt der Welle bestimmbar ist. Dazu kann beispielsweise eine Markierung auf dem Messkörper aufgebracht werden, die mittels des Markierungssystems erfasst wird. Abhängig davon, wo sich die Markierung befindet, kann dann das Markierungssystem Rückschlüsse auf die Lage bzw. den Drehpunkt der Welle ziehen. Dabei kann eine solche Markierung vorab auf dem Messkörper aufgebracht sein, es ist jedoch auch möglich, diese Markierung mittels des Markierungssystems aufzubringen und dann zu vermessen.

Gleichzeitig ist jedoch auch möglich, lediglich über die geometrische Form des Messkörpers Rückschlüsse auf die Lage bzw. den Drehpunkt der Welle zu ziehen.

Der Messkörper selbst, in welcher Ausgestaltung auch immer, ermöglicht vorteilhafterweise eine einfache und schnelle Bestimmung der Lage bzw. des Drehpunkts der Welle, so dass wiederum das Verfahren vereinfacht ist.

Ist an dem Messkörper eine Messmarkierung aufgebracht, so ist insbesondere vorteilhaft, wenn das Markierungssystem, das vorzugsweise zum Bestimmen der Lage und/oder des Drehpunkts der Welle mindestens eine geeignete Strahlungsquelle aufweist, die Messmarkierung bestrahlt, wobei vorzugsweise die Messmarkierung derart ausgebildet ist, dass sie bei Bestrahlung mit der Strahlungsquelle an mindestens einer strukturierten Stelle ein im Vergleich zu einer unstrukturierten Stelle verändertes Abstrahlverhalten zeigt. Da üblicherweise an einem Markierungssystem eine Strahlungsquelle bereits vorhanden ist, kann mit einer derartig ausgebildeten Messmarkierung besonders leicht die Lage bzw. der Drehpunkt der Welle festgestellt werden.

Gemäß einem weiteren vorteilhaften Ausführungsbeispiel wird der Messkörper vor dem Aufbringen der Struktur von der Welle wieder entfernt. Dadurch kann sichergestellt werden, dass die Welle in dem Markierungssystem verbleibt, während nur der Messkörper entfernt wird.

Ein weiterer vorteilhafter Schritt des erfindungsgemäßen Verfahrens umfasst, dass die Welle zur Bestimmung ihrer Lage und/oder ihres Drehpunkts gedreht wird. Dabei kann vor und/oder nach und/oder auch während dieser Drehung die Lage der Welle selbst oder ihr Drehpunkt vermessen werden, oder ein auf der Welle aufgesetzter Messkörper kann, wie oben beschrieben, helfen, die Lage der Welle oder ihren Drehpunkt eindeutig zu bestimmen. Selbstverständlich kann statt der Welle auch die Vorrichtung um die Welle gedreht werden, wobei in diesem Fall vorzugsweise der Messkörper auf die Vorrichtung aufgesetzt wird.

Gemäß einem weiteren vorteilhaften Ausführungsbeispiel wird eine Energiedichte des Markierungssystems für den Schritt des Bestimmens des Drehpunkts und/oder der Lage der Welle geringer angesetzt als für den Schritt des Aufbringens der Struktur. Dabei ist insbesondere bevorzugt, wenn das Markierungssystem als ein Lasersystem ausgebildet ist. Wie oben bereits beschrieben, kann das Markierungssystem auch dazu ausgelegt sein, eine auf einem Messkörper aufgebrachte Messmarkierung abzutasten. Um dies jedoch beschädigungsfrei zu tun, ist es vorteilhaft die Energiedichte des Markierungssystems derart einzustellen, dass an dem Messkörper keine strukturellen Beschädigungen oder Einwirkungen auftreten. Dabei ist besonders bevorzugt, wenn die Energiedichte unter der Markierungsschwelle des verwendeten Materials liegt. Das bedeutet beispielsweise, dass bei der Verwendung eines Lasers der Laser mit einer ersten Energiedichte angesteuert bzw eingesetzt werden kann, die keine Einwirkung auf das Material des Messkörpers und/oder das mit einer Struktur zu versehende Element zeigt und lediglich zum Bestimmen der Lage bzw. des Drehpunkts der Welle dient. Eine zweite Energiedichte ist dagegen derart angepasst, dass auf dem Element eine Struktur aufbringbar ist. Dabei ist eine derartige Struktur meist permanent, da im Bereich der Struktur die Materialeigenschaften des Elements aufgrund der von der Strahlungsquelle, insbesondere vom Laser, eingebrachten Energiedichte verändert werden.

Gemäß einem weiteren vorteilhaften Ausführungsbeispiel umfasst das erfindungsgemäße Verfahren den Schritt des Befestigens des Elements an der Welle oder an einer die Welle umfassenden Vorrichtung, wobei der Schritt des Befestigens des Elements vor dem Schritt a), also dem Schritt des Anordnens der Welle in dem Markierungssystem oder vor dem Schritt c), nämlich dem Aufbringen der Struktur erfolgt. Dabei wird wiederum vorzugsweise die Welle in dem Markierungssystem belassen, so dass nicht aufgrund der Demontage der Welle aus dem Markierungssystem ein Fehler eingetragen wird. Alternativ kann auch zum Befestigen des Elements an der Welle die Welle nochmals aus der Markierungssystem entnommen werden.

Es kann weiterhin vorteilhaft sein, nochmals den Schritt des Bestimmens der Lage auszuführen. Da die Struktur auf das Element erst dann aufgebracht wird, wenn das Element an der Welle befestigt bzw. bezüglich der Welle angeordnet ist, spielt es keine Rolle, ob die Exzentrizität des Elements bestimmt worden ist. Ausschlaggebend für eine Fehlervermeidung ist bei dem erfindungsgemäßen Verfahren das Ausmessen der Lage der Welle, an der das Element befestigt bzw. angeordnet wird.

Gemäß einem weiteren vorteilhaften Ausführungsbeispiel kann mit dem erfindungsgemäßen Verfahren nicht nur ein Element mit einer Struktur versehen werden, sondern es können mehrere bezüglich der Welle anzuordnende Elemente mittels des Verfahrens mit einer Struktur versehen werden. Dazu werden erfindungsgemäß für das weitere Element nur der Schritt des Befestigens und der Schritt des Aufbringens der Struktur durchgeführt. Dadurch kann wiederum das Verfahren vereinfacht und beschleunigt werden.

Vorzugsweise wird erst nach dem Aufbringen aller Strukturen auf alle bezüglich der Welle anzuordnenden Elemente die Welle zusammen mit den an ihr angeordneten Elementen aus dem Markierungssystem entfernt. Dadurch muss die Lage der Welle nur ein einziges Mal vermessen werden, wodurch das Markierungsverfahren deutlich schneller und präziser durchgeführt werden kann. Zudem können mit dem erfindungsgemäßen Verfahren hochpräzise Strukturen auf zueinander verdrehbaren Elementen hergestellt werden, die exakt aufeinander ausgerichtet sind, da keine weiteren Fehler durch ein erst nachträgliches Montieren der fertig strukturierten Elemente an einer Welle auftreten können. Zudem kann nach dem Aufbringen der letzten Struktur auf das letzte Element ein fertig strukturiertes Element, insbesondere ein fertig montiertes Bauteil für ein Winkelmesssystem, vorzugsweise zusammen mit der Vorrichtung in der es verbaut wurde, aus dem Markierungssystem entnommen werden.

Wie oben bereits angedeutet, ist besonders bevorzugt, das erfindungsgemäße Verfahren zum Herstellen eines Winkelmesssystems oder eines Bauteils für ein Winkelmesssystem zu verwenden. Deshalb betrifft ein weiterer Aspekt vorliegender Erfindung ein Verfahren zum Herstellen eines Winkelmesssystems oder eines Bauteils davon, wobei das Winkelmesssystem oder das Bauteil mindestens ein Element mit einer vorzugsweise optisch wirksamen Struktur aufweist, wobei die Struktur gemäß dem oben beschriebenen Verfahren auf das Element aufgebracht ist.

Winkelmesssysteme gibt es in den unterschiedlichsten Bauformen und umfassen üblicherweise ein erstes Element mit einer ersten Struktur und ein gegenüber dem ersten Element verdrehbares zweites Element mit einer zweiten Struktur. Weiterhin kann mindestens eine Strahlungsquelle vorgesehen sein, die Strahlung auf das erste Element mit der vorzugsweise optisch wirksamen, als Maßverkörperung ausgebildeten Struktur und entlang des Strahlungsweges auf eine optisch wirksame Referenzstruktur - also ein zweites Element - strahlt. Dabei werden als optisch wirksame Strukturen häufig Gitterstrukturen verwendet. Da die Strahlung der Strahlungsquelle über die optisch wirksame Struktur der Maßverkörperung und die optisch wirksame Struktur der Referenz abhängig von der Lage der Strukturen zueinander moduliert wird, kann aus dieser Modulation ein Rückschluss auf die Relativlage der beiden optischen Strukturen zueinander gezogen werden. Dazu müssen jedoch die optisch wirksamen Strukturen der Maßverkörperung und des Referenzelements exakt aneinander ausgerichtet sein. Gleichzeitig müssen die optisch wirksamen Strukturen sehr fein ausgebildet sein, um eine ausreichend hohe Auflösung bereitstellen zu können. Eine ungenaue Ausrichtung der Strukturen zueinander, die beispielsweise über Fertigungsungenauigkeiten und Rundlaufungenauigkeiten der Wellenlagerung entstehen können, kann zu Winkelfehlern bzw. zu einer winkelabhängigen Amplitude des Messsignals und davon ausgehend zu der Problematik des möglichen Verschwindens des Messsignals führen.

Mit dem erfindungsgemäßen Verfahren zum Aufbringen einer Struktur auf ein Element kann diese Problematik gelöst werden, da die Struktur nicht bezüglich eines lagebestimmten Elements, sondern bezüglich der lagebestimmten Welle, vorzugsweise aber des lagebestimmten Drehpunktes der Welle auf das bezüglich der Welle angeordnete Element aufgebracht wird. Dadurch können vorteilhafterweise Fehler, die aus einer mangelnden oder nur ungenauen Justierung der Elemente an der Welle oder einer Rundlaufungenauigkeit entstehen, vermieden werden. Gleichzeitig kann dadurch das Verfahren zum Herstellen eines Winkelmesssystems oder eines Bauteils eines Winkelmesssystems vereinfacht werden, da ein nachträgliches zeit- und kostenintensives Anbringen des separat strukturierten Elements an der Welle des Winkelmesssystems entfällt.

Gemäß einem weiteren vorteilhaften Ausführungsbeispiel weist das Winkelmesssystem oder das Bauteil des Winkelmesssystems eine Einheit mit einer drehbaren Welle auf, an der zumindest ein erstes und ein zweites Element anordenbar sind, die zueinander verdrehbar ausgebildet sind, wobei das erste Element drehfest mit der Einheit und das zweite Element drehfest mit der Welle angeordnet sind, auf denen im angeordneten Zustand die Struktur aufgebracht wird.

Dabei ist insbesondere bevorzugt, wenn die folgenden Schritte ausgeführt werden:
1. Befestigen des ersten Elements drehfest an der Baueinheit und Anordnen der Baueinheit im Markierungssystem;
2. Anbringen eines Messkörpers auf der Welle der Baueinheit;
3. Drehen der Welle und Bestimmen eines Drehpunkts und/oder einer Lage der Welle in Relation zu einem Referenzpunkt, insbesondere eines Nullpunkts des Markierungssystems mittels des Markierungssystems unter Verwendung des Messkörpers;
4. Entfernen des Messkörpers;
5. Aufbringen der optisch wirksamen Struktur auf das erste Element;
6. Befestigen des zweiten Elements drehfest an der Welle;
7. Aufbringen der optisch wirksamen Struktur auf das zweite Element;
8. Entfernen der Baueinheit aus dem Markierungssystem.

Dabei wird während der Schritte 2 bis 7 die Baueinheit unverändert in dem Markierungssystem belassen. Dadurch kann sichergestellt werden, dass die optisch wirksamen Strukturen des ersten bzw. zweiten Elements zueinander optimal ausgerichtet sind, so dass eine nahezu verzerrungsfreie Winkelbestimmung ermöglicht, bzw. ein Verschwinden des Signals aufgrund von Rundlaufungenauigkeiten oder Montagefehlern nicht auftreten kann.

Vorzugsweise werden die Schritte 6 und 7 des erfindungsgemäßen Verfahrens solange ausgeführt, bis alle an der Baueinheit zu befestigenden Elemente mit einer optisch wirksame Struktur versehen sind.

Gemäß einem weiteren vorteilhaften Ausführungsbeispiel ist die Baueinheit des Winkelmesssystems mit einer Antriebseinheit mit einer drehbaren Welle verbindbar oder als Antriebseinheit mit einer drehbaren Welle ausgebildet, wobei das erste Element drehfest mit der Baueinheit bzw. der Antriebseinheit und das zweite Element drehfest mit der Welle angeordnet sind. Dabei ist besonders vorteilhaft, dass das Winkelmesssystem bei seiner Herstellung bereits mit der Antriebseinheit ausgestattet sein kann, wodurch zusätzliche fehlerbehaftete Montageschritte durch das Anordnen des Winkelmesssystems an einer Welle einer Antriebseinheit, entfallen können.

Ein weiterer Aspekt vorliegender Erfindung betrifft ein Winkelmesssystem oder ein Bauteil eines Winkelmesssystems, das wie oben beschrieben hergestellt ist, oder das ein Element mit einer Struktur aufweist, wobei die Struktur wie oben beschrieben auf das Element aufgebracht ist.

Weitere Vorteile und vorteilhafte Ausführungsformen sind in den Ansprüchen, der Beschreibung und den Zeichnungen definiert.

Im Folgenden soll die Erfindung anhand von in den Figuren dargestellten Ausführungsbeispielen näher beschrieben werden. Dabei sind die Figuren rein exemplarischer Natur und sollen nicht den Schutzbereich der Anmeldung festlegen. Dieser wird allein durch die anhängigen Ansprüche definiert.

Es zeigen:
- Fig. 1: eine schematische Darstellung eines Markierungssystems, das gemäß dem erfindungsgemäßen Verfahren arbeitet, in einem ersten Verfahrenszustand; und
- Fig. 2: das in Fig. 1 dargestellte Markierungssystem in einem zweiten Verfahrensabschnitt; und
- Fig. 3: das in Fig. 1 und Fig. 2 dargestellte Markierungssystem in einem dritten Verfahrensabschnitt.

Im Folgenden werden gleiche und funktionell gleichwirkende Elemente mit denselben Bezugszeichen gekennzeichnet.

Das im Folgenden beschriebene Verfahren ist insbesondere für die Herstellung von Winkelmesssystemen besonders bevorzugt, kann jedoch auch allgemein zum Herstellen einer Struktur auf einem Element verwendet werden. Die Besonderheit bei Winkelmesssystemen ist jedoch, dass sie hinsichtlich der aufzubringenden Strukturen hohen Präzisionsanforderungen genügen müssen.

Winkelmesssysteme gibt es dabei in den unterschiedlichsten Bauformen und Konstruktionsweisen. Üblicherweise enthalten sie mindestens zwei gegeneinander verdrehbar angeordnete Elemente, die bezüglich einer Welle gelagert sind, deren Verdrehungswinkel bestimmt werden soll. Diese Elemente werden vorzugsweise mit einer Strahlungsquelle, insbesondere einer Lichtquelle bestrahlt. Um den Verdrehungswinkel zu bestimmen, weist das eine Element eine optisch wirksame Struktur als Maßverkörperung auf, die im Fall eines Durchlichtaufbaus abwechselnd lichtdurchlässige und lichtundurchlässige Bereiche und im Fall eines in Reflexion betriebenen Aufbaus, reflektierende und nicht reflektierende Bereiche enthält. Diese Maßverkörperung kann allgemein als ein Element mit einer vorzugsweise optisch wirksamen Struktur betrachtet werden, das bezüglich einer Welle des Winkelmesssystems angeordnet ist.

Zudem weist das Winkelmesssystem üblicherweise als anderes Element eine weitere optisch wirksame Referenzstruktur mit abwechselnd lichtundurchlässigen und lichtdurchlässigen bzw. reflektierenden und nicht reflektierenden Bereichen auf. Diese Referenzstruktur kann deshalb ebenfalls als ein Element mit einer vorzugsweise optisch wirksamen Struktur definiert werden, das bezüglich der Welle des Winkelmesssystems angeordnet ist. Dabei werden als optisch wirksame Strukturen vorzugsweise Gitterstrukturen verwendet.

Das von der Lichtquelle ausgestrahlte Licht wird durch die Maßverkörperung und die Referenzstruktur abhängig von der relativen Verdrehung der Strukturen zueinander moduliert und fällt anschließend auf zumindest einen geeignet verschalteten Detektor. Abhängig von der relativen Verdrehung zwischen Maßverkörperung und Referenzstruktur entstehen so unterschiedliche Signale, die von den Detektoren detektiert werden, aus denen wiederum bestimmt werden kann, welche Position Referenzstruktur und Maßverkörperung zueinander aufweisen.

Dazu werden in den Detektoren üblicherweise bis zu vier Signale erzeugt, die in einer festen Phasenbeziehung zueinander stehen und die nach Offset und Amplitudenkompensation für eine höher auflösende Interpolation und damit zu einer genaueren Messung zur Verfügung stehen. Dabei kann, wie aus dem Stand der Technik bekannt, der Detektor und eine der optisch wirksamen Strukturen, beispielsweise die Referenzstruktur, auch auf ein und demselben Element untergebracht sein oder der Detektor selbst kann die entsprechende Struktur aufweisen. Weiterhin ist bekannt, den Detektor, die Referenzstruktur, die Auswerteelektronik und die Beleuchtung in einem sogenannten Abtastkopf zu vereinigen, wohingegen die Maßverkörperung an einem zum Abtastkopf beweglichen Teil angebracht wird, dessen Relativposition zum Abtastkopf bestimmt werden soll.

Unabhängig davon müssen die Maßverkörperung und die Referenzstruktur exakt aufeinander und im Bezug auf die Lage der Welle, vorzugsweise aber in Bezug auf den Drehpunkt der Welle ausgerichtet sein, um möglichst genaue Messwerte zu erhalten. Ist diese Ausrichtung ungenügend, so wird der Winkel verzerrt detektiert, und/oder das Signal wird in seiner Amplitude verändert und kann sogar annähernd zum Verschwinden gebracht werden. Dabei können schon minimale Ausrichtungsfehler in der Größenordnung von wenigen µm unerwünschte Signalveränderungen nach sich ziehen. Um diesen Ausrichtungsproblemen zu begegnen, wurde zwar im Stand der Technik vorgeschlagen, die Exzentrizität des Maßverkörperungselements zu bestimmen und diese beim Aufbringen der Maßverkörperung zu berücksichtigen, dabei werden jedoch entweder Rundlaufungenauigkeiten der Welle selbst, an der üblicherweise die Maßverkörperung nach dessen Herstellung befestigt wird, vernachlässigt, so dass die Maßverkörperung nach dessen Verbau doch nicht um den ausgemessenen Drehpunkt rotiert oder die Maßverkörperung muss nach dessen Herstellung beim Verbau gemäß DE 10 2005 021 präzise auf die Welle eingemessen werden, was zusätzliche Anforderungen an die Beschaffenheit des Elements der Maßverkörperung und zusätzliche Anforderungen an die Beschaffenheit der Maßverkörperungsaufnahme an der Welle stellt. Des weiteren werden beim Verbau zusätzliche Messmittel benötigt, durch die die in DE 10 2005 021 geforderten Abstände bestimmt werden können. Des weiteren muss die Maßverkörperung dann unter Einhaltung dieser Abstände an der Welle befestigt werden.

Erfindungsgemäß wird deshalb vorgeschlagen, nicht die Exzentrizität des Elements, auf das die Struktur aufgebracht wird, sondern die Lage bzw. den Drehpunkt der Welle selbst, bezüglich der das Element angeordnet wird, auszumessen und beim Aufbringen der Struktur zu berücksichtigen. Dabei ist das erfindungsgemäße Verfahren insbesondere geeignet, für Markierungssysteme die mittels eines Lasers die Strukturen auf die Elemente eines Winkelmesssystems aufbringen.

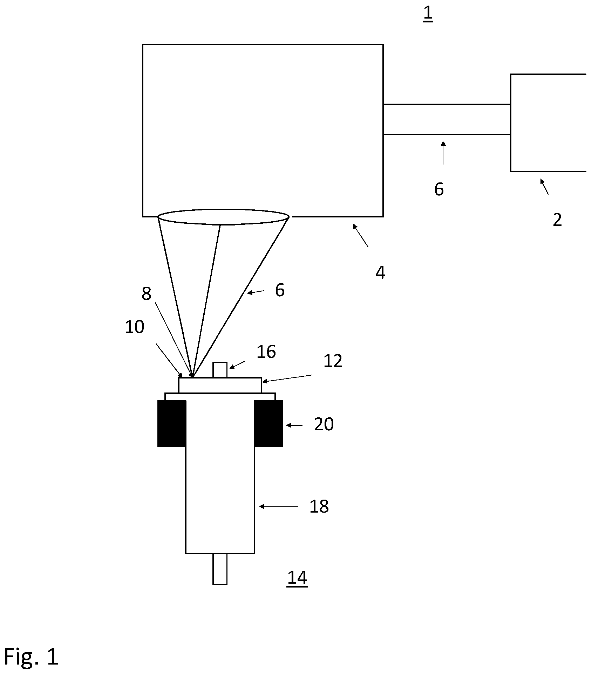

Beispielhaft wird im Folgenden unter Bezugnahme auf die Fig. 1 bis 3 das erfindungsgemäße Verfahren anhand eines Winkelmesssystems, insbesondere einer Baueinheit 14 eines Winkelmesssystems, beschrieben, wobei das Winkelmesssystem ein drehfest mit der Baueinheit 14 verbundenes Element 12 aufweist, welches die Referenzstruktur trägt und ein drehfest mit einer Welle 16 der Baueinheit 14 verbundenes Element 24 aufweist, das die Struktur der Maßverkörperung trägt. Dabei werden die Strukturen mittels eines als Lasersystem ausgebildeten Markierungssystems 1 aufgebracht, wobei erfindungsgemäß nicht, wie aus dem Stand der Technik bekannt, die Elemente 12, 24 einzeln in die Markierungsvorrichtung 1 eingespannt werden, sondern die gesamte Baueinheit 14.

Fig. 1 zeigt schematisch ein Markierungssystem 1 mit einer Lasereinheit 2 und einer Ablenkeinheit 4, die einen Laserstrahl 6 bündelt und in einem Punkt 8 fokussiert. Dabei wird der Fokus 8 derart eingestellt, dass er genau auf einer Bearbeitungsebene 10 eines mit einer Struktur zu versehenden Elementes 12 ausgebildet ist. Dabei ist das mit der Struktur zu versehende Element 12, wie Fig. 1 zeigt, nicht, wie aus dem Stand der Technik bekannt, separat in der Markierungseinheit 1 angeordnet, sondern ist an der Baueinheit 14 des Winkelmesssystems angeordnet. Die Baueinheit 14 weist dabei eine drehbar gelagerte Welle 16 und eine starre Einheit 18 auf, die wiederum von Halteelementen 20 an dem Markierungssystem 1 gehalten sind. Dabei ist die drehbare Welle 16 üblicherweise über einen Motor, insbesondere einen Elektromotor, antreibbar oder als Teil desselben ausgebildet, wobei die Verdrehung der Welle 16 bezüglich der starren Einheit 18 mittels des Winkelmesssystems bestimmt werden soll.

Das mit der Struktur zu versehende Element 12 ist in dem hier dargestellten Ausführungsbeispiel drehfest mit der starren Einheit 18 verbunden und bildet somit einen Teil der Baueinheit 14. Selbstverständlich wäre es auch möglich das Element 12 statt mit der starren Einheit 18 mit der Welle 16 drehfest zu verbinden.

Statt wie aus dem Stand der Technik bekannt nun die Exzentrizität des Elements 12, 24 zu bestimmen, wird erfindungsgemäß die Lage bzw. der Drehpunkt der Welle 16 bestimmt, bevor das Element 12, 24 in Abhängigkeit der bestimmten Werte mit einer Struktur versehen wird.

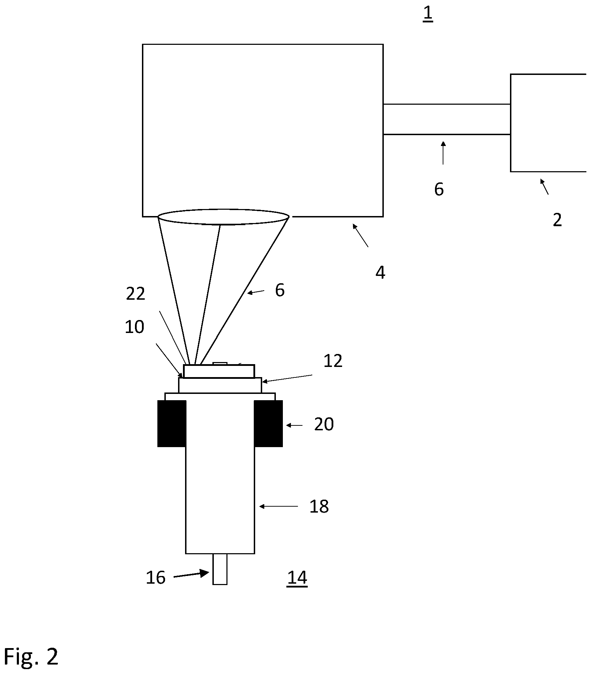

Um die Lage bzw. den Drehpunkt der Welle 16 zu bestimmen, wird erfindungsgemäß, wie Fig. 2 zeigt, auf die Welle 16 ein Messkörper 22 aufgesetzt, wobei der Messkörper 22 vorzugsweise formschlüssig an der Welle 16 angeordnet ist.

Der Messkörper 22 selbst kann verschiedene Ausgestaltungen aufweisen. Zum einen kann der Messkörper 22 als Sensor ausgebildet sein, der dazu ausgelegt ist, Signale zur Verfügung zu stellen, die verwendet werden können um (aktiv) die Lage der Welle, vorzugsweise aber deren Drehpunkt exakt zu bestimmen und die gemessenen Werte über eine geeignete Schnittstelle an das Markierungssystem 1 zu senden. Neben dieser aktiven Messung kann auch ein passiver Messkörper 22 verwendet werden, der beispielsweise direkt mit dem Markierungssystem 1 vermessen wird. Dabei kann der Messkörper 22 zum einen eine geeignete geometrische Form aufweisen, zum anderen kann auf dem Messkörper 22 eine vorgefertigte Messmarkierung aufgebracht sein, die mittels des Markierungssystems 1 abgetastet wird. Alternativ oder zusätzlich kann auch eine Messmarkierung z.B durch das des Markierungssystem 1 auf den Messkörper 22 aufgebracht werden, die mittels des Messsystems oder auch mittels einer externen Beobachtungseinrichtung, wie beispielsweise einem Mikroskop, ausgemessen werden kann, um die Lage der Welle vorzugsweise aber deren Drehpunkt exakt zu bestimmen.

Üblicherweise wird, um die Messmarkierung auf dem Messkörper 22, sei sie vorgefertigt oder aufgebracht, oder auch um die geometrische Struktur des Messkörpers 22 zu erfassen und daraus die Lage der Welle 16 zu bestimmen, der Messkörper 22 in einer ersten Position vermessen, dann in eine zweite Position, vorzugsweise um ca. 180°, mittels der Welle 16 verdreht, in der der Messkörper 22 erneut vermessen wird. Alternativ kann auch hier mindestens eine entsprechende Messmarkierung aufgebracht werden. Das erhaltene Ergebnis wird dann im Hinblick auf die Verdrehung, beispielsweise den ca. 180° Winkel, und im Hinblick auf seinen Versatz ausgewertet. Die Auswertungsergebnisse werden dann in Relation zu einem, vorzugsweise vorbestimmten, Referenzpunkt des Lasersystems, beispielsweise einen Nullpunkt, gesetzt. Dadurch werden Korrekturwerte für die später aufzubringende Struktur erhalten, die die tatsächliche Lage bzw. den tatsächlichen Drehpunkt der Welle 16 angeben. Die danach auf das Element 12 aufgebrachte Struktur berücksichtigt demnach in einfacher Weise die genaue Lage, vorzugsweise aber den genauen Drehpunkt der Welle.

Dieses Verfahren zum Bestimmen der Lage bzw. des Drehpunkts der Welle kann wiederholt werden, um den Erfolg zu prüfen oder eine weitere Verbesserung der Zentrierung zu erreichen. Es sei dabei erwähnt, dass auch andere Winkel als ca. 180° für die Ermittlung der Relation zwischen Lage der Welle und Referenzpunkt des Lasersystems verwendet werden können.

Als Messkörper eignen sich insbesondere Messkörper mit einer Messmarkierung, die mit hoher Präzision gefertigt ist und ein im Vergleich zu einer unmarkierten Stelle unterschiedliches Abstrahlverhalten zeigt. Zur Bestimmung der Lage dieser Messmarkierung kann der Laserstrahl 6 derart in seiner Energie angepasst werden, dass ein beschädigungsfreies Abtasten des Messkörpers 22 möglich ist. Dazu kann die Energie des Lasers 2 verringert werden, es ist jedoch auch möglich, einen zusätzlichen und kollinear zum Strahlengang des Markierungslasers eingekoppelten Pilotlaser zu verwenden.

Ist die Lage der Welle 16 mittels des Messkörpers 22 bestimmt, wird der Messkörper 22 vorzugsweise wieder von der Welle 16 entfernt und mittels des Markierungssystems 1 wird die benötige Struktur auf dem Element 12 hergestellt, wobei die bestimmten Korrekturwerte verwendet werden.

Alternativ ist es selbstverständlich auch möglich, das Element 12 erst nach der Bestimmung der Lage der Welle 16 an der Baueinheit 14, insbesondere der starren Einheit 18 anzubringen. Dabei kann die drehfeste Anbringung beispielsweise dadurch erfolgen, dass das Element 12 an der starren Einheit 18 mittels Kleben befestigt wird.. Passungen und/oder Schraubverbindungen sind aber ebenfalls möglich.

Zum Aufbringen der Struktur selbst wird, wie Fig. 1 zeigt, der Fokus 8 des Laserstrahls 6 auf die Ebene 10 des Elements 12 eingestellt und die Laserenergie des Lasers 2 derart eingestellt, dass sie über der Markierungsschwelle liegt, also die Materialstruktur des Elements 12 veränderbar ist.

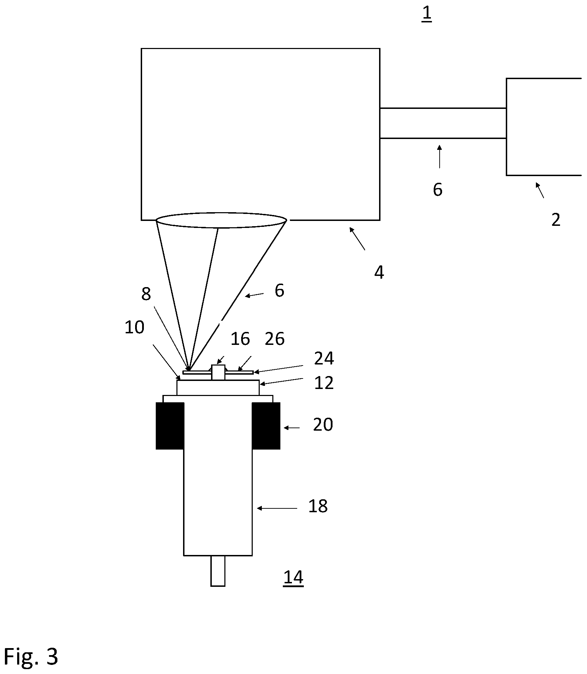

Weist die Baueinheit 14 nicht nur das Element 12 als strukturtragendes Element auf, so kann nach dem Aufbringen der Struktur auf das erste Element 12 ein weiteres Element, beispielsweise, wie Fig. 3 zeigt, das Element 24 an der Welle 16 angeordnet werden. In Fig. 3 ist dargestellt, dass das Element 24 drehfest mit der Welle 16 verbunden ist, und damit gegenüber dem Element 12 verdrehbar gelagert ist. Dabei kann die Befestigung an der Welle wiederum beispielsweise mittels Kleben erfolgen.

Da die Baueinheit 14 nach dem Aufbringen der Struktur auf das erste Element 12 vorzugsweise nicht aus der Markierungseinheit 1 entfernt worden ist, können zum Aufbringen der Struktur auf das zweite Element 24 die gleichen Korrekturwerte bezüglich der Lage der Welle 16 verwendet werden, wie beim Aufbringen der Struktur auf das Element 12. Dadurch können Fehler in der Fertigung vermieden werden. Selbstverständlich ist es aber auch möglich die Lage der Welle 16 nochmals, wie oben beschrieben, zu bestimmen. Um die Struktur auf dem Element 24 aufzubringen, wird wiederum der Laserstrahl 6 derart in einem Punkt 8 fokussiert, dass dieser mit der Bearbeitungsebene 26 des Elements 24 übereinstimmt. Dazu kann die Ablenkeinheit 4 entsprechend angesteuert werden.

Wie aus den Fig. 1 bis 3 hervorgeht, kann mithilfe des erfindungsgemäßen Verfahrens ein hochpräzises Winkelmesssystem hergestellt werden, das sehr robust gegenüber nicht zu vermeidenden Anordnungsfehlern der Referenzstruktur bezüglich der Maßverkörperung und auch gegen Rundlaufungenauigkeiten der Welle 16 selbst ist. Dabei kann die Referenzstruktur beispielsweise als drehfestes Element 12 angesehen werden, das drehfest mit der Baueinheit 14 verbunden ist, während die Maßverkörperung als Element 16 drehfest mit der Welle 16 verbunden ist. Da beide Elemente 12, 24 hinsichtlich des Drehpunkts der Welle 16 mit Strukturen versehen worden sind, kann ein Winkelmesssystem geschaffen werden, das auf einfache Weise sehr präzise Messungen zulässt.

In nachfolgenden Schritten kann die Baueinheit 14 in an sich bekannter Weise zumindest noch mit einer Strahlungsquelle, einem Detektor, und/oder einer Auswerteelektronik ausgestattet werden, um ein vollwertiges Winkelmesssystem bereitzustellen.

### Bezugszeichenliste

- 1: Markierungssystem
- 2: Strahlungsquelle = Laser
- 4: Ablenkeinheit
- 6: Laserstrahl
- 8: Fokus
- 10, 26: Bearbeitungsebene
- 12: erstes Element
- 14: Einheit/Baueinheit
- 16: Welle
- 18: starre Einheit
- 20: Halterung
- 22: Messkörper
- 24: zweites Element

## Patentansprüche

1. Verfahren zum Aufbringen einer Struktur, insbesondere einer Markierung und/oder einer Beschriftung, auf mindestens ein Element (12; 24) mit einem Markierungssystem (1), insbesondere einem Lasersystem, wobei das mindestens eine Element (12; 24) bezüglich einer Welle (16) fest angeordnet ist, **gekennzeichnet durch** folgende Schritte:
a) Anordnen der Welle (16) oder der Welle mit dem bezüglich der Welle (16) angeordneten Element (12; 24) in dem Markierungssystem (1);
b) Bestimmen einer Ortslage der Welle (16) und/oder eines Drehpunktes der Welle (16) in Relation zu einem Referenzpunkt, vorzugsweise dem Nullpunkt, des Markierungssystems (1);
c) Aufbringen der Struktur auf das Element (12; 24) unter Berücksichtigung der Bestimmung der Ortslage und/oder des Drehpunkts der Welle (16).

2. Verfahren nach Anspruch 1, wobei die Welle (16) oder die Welle (16) mit dem bezüglich der Welle (16) angeordneten Element (12; 24) während aller nach Schritt a) folgenden Schritte in dem Markierungssystems (1) belassen wird.

3. Verfahren nach einem der vorhergehenden Ansprüche, wobei zwischen Schritt a) und b) ein, vorzugsweise formschlüssiger, Messkörper (22) auf die Welle (16) aufgesetzt wird, mit dem die Bestimmung der Relation von Ortslage und/oder Drehpunkt der Welle (16) zu einem Referenzpunkt des Markierungssystems (1) erfolgt, wobei vorzugsweise der Messkörper (22) vor dem Aufbringen der Struktur auf das mindestens eine Element (12; 24) von der Welle (16) entfernt wird..

4. Verfahren nach Anspruch 3, wobei die Bestimmung der Ortslage und/oder des Drehpunkts der Welle (16) mittels eines Messkörpers (22) erfolgt, der als ein aktiver Messkörper (22), insbesondere als ein Sensor, ausgebildet ist.

5. Verfahren nach Anspruch 3 oder 4, wobei die Bestimmung der Ortslage und/oder des Drehpunkts der Welle (16) mittels eines Messkörpers (22) erfolgt, der als ein passiver Messkörper (22) ausgebildet sein kann, wobei vorzugsweise die Bestimmung der Ortslage und/oder des Drehpunkts der Welle (16) über eine geometrische Ausgestaltung des Messkörpers (22) und/oder über eine am Messkörper (22) ausgebildete Messmarkierung bereitgestellt ist.

6. Verfahren nach Anspruch 5, wobei die Messmarkierung zumindest teilweise als vorgefertigte Messmarkierung auf dem Messkörper (22) aufgebracht ist, wobei vorzugsweise die Messmarkierung zumindest teilweise während des Schritts des Bestimmens der Ortslage und/oder des Drehpunkts der Welle (16), vorzugsweise mittels des Markierungssystems (1), auf den Messkörper (22) aufgebracht wird.

7. Verfahren nach Anspruch 5 oder 6, wobei das Markierungssystem (1) zumindest zum Bestimmen der Ortslage und/oder des Drehpunkts der Welle (16) mindestens eine Strahlungsquelle (2) aufweist, wobei vorzugsweise die Messmarkierung bei Bestrahlung mit der Strahlungsquelle (2) an mindestens einer strukturierten Stelle ein im Vergleich zu einer unstrukturierten Stelle verändertes Abstrahlverhalten zeigt.

8. Verfahren nach einem der vorhergehenden Ansprüche, wobei zur Bestimmung der Ortslage und/oder des Drehpunktes der Welle (16) diese gedreht wird.

9. Verfahren nach einem der vorhergehenden Ansprüche, wobei eine Energiedichte des Markierungssystems (1) für den Schritt des Bestimmens des Drehpunkts und/oder der Ortslage der Welle (16) geringer ist als für den Schritt des Aufbringens der Struktur, wobei vorzugsweise das Markierungssystem (1) als ein Lasersystem ausgebildet ist.

10. Verfahren nach einem der vorhergehenden Ansprüche, weiterhin umfassend den Schritt des Befestigens des Elements (12; 24) an der Welle (16) oder an einer die Welle (16) umfassenden Vorrichtung, wobei der Schritt des Befestigens des Elements (12; 24) vor Schritt a) oder vor Schritt c) erfolgt, wobei vorzugsweise für die Aufbringung einer Struktur auf ein weiteres bezüglich der Welle (16) anzuordnendes Element (12; 24), nur der Schritt des Befestigens und der Schritt des Aufbringens der Struktur durchgeführt werden.

11. Verfahren nach einem der vorgehenden Ansprüche, wobei nach Aufbringen der Strukturen auf alle bezüglich der Welle (16) anzuordnenden Elemente (12; 24), die Welle (16) mit dem mindestens einen bezüglich der Welle (16) angeordneten Elements (12; 24) aus dem Markierungssystem (1) entfernt wird.

12. Verfahren zum Herstellen eines Winkelmesssystems oder eines Bauteils eines Winkelmesssystems, wobei das Winkelmesssystem oder das Bauteil mindestens ein Element (12; 24) mit einer vorzugsweise optisch wirksamen Struktur aufweist, wobei die Struktur gemäß einem Verfahren nach einem der vorhergehenden Ansprüche auf das Element (12; 24) aufgebracht wird, wobei vorzugsweise das Winkelmesssystem oder das Bauteil eine Baueinheit (14) mit einer drehbaren Welle (16) aufweist, an der zumindest ein erstes und ein zweites Element (12; 24) angeordnet werden, die zueinander verdrehbar ausgebildet sind, wobei das erste Element (12) drehfest mit der Baueinheit (14) und das zweite Element (24) drehfest mit der Welle (16) angeordnet werden, auf denen im angeordneten Zustand die Struktur aufgebracht wird.

13. Verfahren nach Anspruch 12, wobei zur Herstellung des Winkelmesssystems oder des Bauteils insbesondere die folgenden Schritte ausgeführt werden:
i. Befestigen des ersten Elements drehfest an einer Baueinheit (14) und Anordnen der Baueinheit (14) im Markierungssystem (1);
ii. Anbringen eines Messkörpers (22) auf der Welle (16) der Baueinheit (14);
iii. Drehen der Welle (16) und Bestimmen eines Drehpunkts oder einer Ortslage der Welle (16) in Relation zu einem Referenzpunkt, insbesondere eines Nullpunkts des Markierungssystems (1) mittels des Markierungssystems (1) unter Verwendung des Messkörpers (22);
iv. Entfernen des Messkörpers (22);
v. Aufbringen der optisch wirksamen Struktur auf das erste Element;
vi. Befestigen des zweiten Elements drehfest an der Welle (16);
vii. Aufbringen der optisch wirksamen Struktur auf dem zweiten Element;
viii. Entfernen der Baueinheit (14) aus dem Markierungssystem (1),
wobei während der Schritte ii. bis vii. die Baueinheit unverändert in dem Markierungssystem (1) belassen wird, wobei vorzugsweise die Schritte vi. und vii. solange ausgeführt werden bis auf alle an der Baueinheit (14) zu befestigenden Elemente (12; 24) eine optisch wirksame Struktur aufgebracht ist.

14. Verfahren nach Anspruch 13, wobei die Baueinheit als eine Antriebseinheit mit einer drehbaren Welle ausgebildet ist, oder mit einer Antriebseinheit mit einer drehbaren Welle verbindbar ist.

## Claims

1. Method for applying a structure, in particular a marking and/or inscription, to at least one element (12; 24) with a marking system (1), in particular a laser system, wherein the at least one element (12; 24) is firmly arranged relative to a shaft (16), **characterised by** the following steps:
a) arranging the shaft (16) or the shaft with the element (12; 24) arranged relative to the shaft (16) in the marking system (1);
b) determining a spatial position of the shaft (16) and/or a centre of rotation of the shaft (16) in relation to a reference point, preferably the zero point, of the marking system (1);
c) applying the structure to the element (12; 24) taking into account the determination of the spatial position and/or the centre of rotation of the shaft (16).

2. Method according to claim 1, wherein the shaft (16) or the shaft (16) with the element (12; 24) arranged relative to the shaft (16) is left in the marking system (1) during all the steps following step a).

3. Method according to any one of the preceding claims, wherein between step a) and b) a, preferably form-fitting, measuring body (22) is placed on the shaft (16), by means of which the relation of the spatial position and/or centre of rotation of the shaft (16) to the reference point of the marking system (1) is determined, wherein preferably the measuring body (22) is removed from the shaft (16) prior to applying the structure to the at least one element (12; 24)..

4. Method according to claim 3, wherein the spatial position and/or centre of rotation of the shaft (16) is determined by means of a measuring body (22) which is formed as an active measuring body (22), in particular as a sensor.

5. Method according to claim 3 or 4, wherein the spatial position and/or centre of rotation of the shaft (16) is determined by means of a measuring body (22) which can be formed as a passive measuring body (22), wherein preferably the determination of the spatial position and/or centre of rotation of the shaft (16) is provided via a geometric design of the measuring body (22) and/or via a measuring marking formed on the measuring body (22).

6. Method according to claim 5, wherein the measuring marking is applied to the measuring body (22) at least partially as a prefabricated measuring marking, wherein preferably the measuring marking is applied to the measuring body (22) at least partially during the step of determining the spatial position and/or centre of rotation of the shaft (16), preferably by means of the marking system (1).

7. Method according to claim 5 or 6, wherein the marking system (1) comprises at least one radiation source (2) at least for determining the spatial position and/or centre of rotation of the shaft (16), wherein preferably the measuring marking upon irradiation with the radiation source (2) has at at least one structured region a different reflection behaviour compared to an unstructured region.

8. Method according to any one of the preceding claims, wherein the shaft (16) is rotated in order to determine the spatial position and centre of rotation thereof.

9. Method according to any one of the preceding claims, wherein for the step of determining the centre of rotation and/or the spatial position of the shaft (16) a energy density of the marking system (1) is lower than for the step of applying the structure, wherein preferably the marking system (1) is formed as a laser system.

10. Method according to any one of the preceding claims, further comprising the step of attaching the element (12; 24) to the shaft (16) or to a device including the shaft (16), wherein the step of attaching the element (12; 24) is performed before step a) or before step c), wherein preferably for the application of a structure to a further element (12; 24) to be arranged relative to the shaft (16), the attaching step and the step of applying the structure are performed, only.

11. Method according to any one of the preceding claims, wherein after applying the structures to all the elements (12; 24) to be arranged relative to the shaft (16), the shaft (16) with the at least one element (12; 24) arranged relative to the shaft (16) is removed from the marking system (1).

12. Method for producing an angle measurement system or a component of an angle measurement system, wherein the angle measurement system or the component comprises at least one element (12; 24) having a preferably optically effective structure, wherein the structure is applied to the element (12; 24) in accordance with a method as claimed in any one of the preceding claims, wherein preferably the angle measurement system or the component comprises a structural unit (14) having a rotatable shaft (16) on which at least one first and one second element (12; 24) are arranged which are formed to be rotatable with respect to each other, wherein the first element (12) is arranged for co-rotation with the structural unit (14) and the second element (24) is arranged for co-rotation with the shaft (16) to which the structure is applied in the arranged state.

13. Method according to claim 12, wherein in order to produce the angle measurement system or the component the following steps are performed in particular:
i. attaching the first element to a structural unit (14) for co-rotation therewith and arranging the structural unit (14) in the marking system (1);
ii. affixing a measuring body (22) to the shaft (16) of the structural unit (14);
iii. rotating the shaft (16) and determining a centre of rotation and/or a spatial position of the shaft (16) in relation to a reference point, in particular a zero point of the marking system (1) by means of the marking system (1) using the measuring body (22);
iv. removing the measuring body (22);
v. applying the optically effective structure to the first element;
vi. attaching the second element to the shaft (16) for co-rotation therewith;
vii. applying the optically effective structure to the second element;
viii. removing the structural unit (14) from the marking system (1),
wherein, during steps ii. to vii., the structural unit remains in the marking system (1) unchanged, wherein preferably steps vi. and vii. are performed until an optically effective structure is applied to all the elements (12; 24) to be attached to the structural unit (14).

14. Method according to claim 13, wherein the structural unit is formed as a drive unit having a rotatable shaft or can be connected to a drive unit having a rotatable shaft.

## Revendications

1. Procédé d'application d'une structure, notamment d'un marquage et/ou d'une inscription, sur au moins un élément (12 ; 24) à l'aide d'un système de marquage (1), notamment d'un système laser, dans lequel procédé l'au moins un élément (12 ; 24) est disposé de manière fixe par rapport à un arbre (16), **caractérisé par** les étapes suivantes :
a) disposition dans le système de marquage (1) de l'arbre (16) ou de l'arbre avec l'élément (12 ; 24) disposé par rapport à l'arbre (16) ;
b) détermination d'une position locale de l'arbre (16) et/ou d'un point de rotation de l'arbre (16) par rapport à un point de référence, de préférence le point zéro, du système de marquage (1) ;
c) application de la structure sur l'élément (12 ; 24) en tenant compte de la détermination de la position locale et/ou du point de rotation de l'arbre (16).

2. Procédé selon la revendication 1, dans lequel l'arbre (16) ou l'arbre (16) avec l'élément (12 ; 24) disposé par rapport à l'arbre (16) est laissé dans le système de marquage (1) pendant toutes les étapes succédant à l'étape a).

3. Procédé selon l'une quelconque des revendications précédentes, dans lequel, entre les étapes a) et b), un corps de mesure (22), de préférence à adhérence de forme, est posé sur l'arbre (16), à l'aide duquel la détermination de la relation entre la position locale et/ou le point de rotation de l'arbre (16) par rapport à un point de référence du système de marquage (1) est réalisée, dans lequel de préférence le corps de mesure (22) est retiré de l'arbre (16) avant l'application de la structure sur l'au moins un élément (12 ; 24).

4. Procédé selon la revendication 3, dans lequel la détermination de la position locale et/ou du point de rotation de l'arbre (16) est réalisée au moyen d'un corps de mesure (22) qui est réalisé en tant qu'un corps de mesure (22) actif, notamment en tant qu'un capteur.

5. Procédé selon la revendication 3 ou 4, dans lequel la détermination de la position locale et/ou du point de rotation de l'arbre (16) est réalisée au moyen d'un corps de mesure (22) qui peut être réalisé en tant qu'un corps de mesure (22) passif, dans lequel de préférence la détermination de la position locale et/ou du point de rotation de l'arbre (16) est fournie par l'intermédiaire d'une conception géométrique du corps de mesure (22) et/ou par l'intermédiaire d'un marquage de mesure réalisé sur le corps de mesure (22).

6. Procédé selon la revendication 5, dans lequel le marquage de mesure est appliqué sur le corps de mesure (22) au moins en partie en tant que marquage de mesure préfabriqué, dans lequel de préférence le marquage de mesure est appliqué sur le corps de mesure (22) au moins en partie pendant l'étape de la détermination de la position locale et/ou du point de rotation de l'arbre (16), de préférence au moyen du système de marquage (1).

7. Procédé selon la revendication 5 ou 6, dans lequel le système de marquage (1) présente au moins une source de rayonnement (2) pour la détermination de la position locale et/ou du point de rotation de l'arbre (16), dans lequel de préférence le marquage de mesure, lors du rayonnement avec la source de rayonnement (2), indique à au moins un endroit structuré un comportement de rayonnement modifié en comparaison avec un endroit non structuré.

8. Procédé selon l'une quelconque des revendications précédentes, dans lequel, pour déterminer la position locale et/ou le point de rotation de l'arbre (16), celui-ci est mis en rotation.

9. Procédé selon l'une quelconque des revendications précédentes, dans lequel une densité énergétique du système de marquage (1) pour l'étape de la détermination du point de rotation et/ou de la position locale de l'arbre (16) est plus faible que pour l'étape de l'application de la structure, le système de marquage (1) étant de préférence réalisé en tant qu'un système laser.

10. Procédé selon l'une quelconque des revendications précédentes, comprenant en outre l'étape de la fixation de l'élément (12; 24) sur l'arbre (16) ou sur un dispositif comprenant l'arbre (16), dans lequel l'étape de la fixation de l'élément (12; 24) est réalisée avant l'étape a) ou avant l'étape c), dans lequel, de préférence pour l'application d'une structure sur un élément (12 ; 24) supplémentaire à disposer par rapport à l'arbre (16), seulement l'étape de la fixation et l'étape de l'application de la structure sont réalisées.

11. Procédé selon l'une quelconque des revendications précédentes, dans lequel, après l'application des structures sur tous les éléments (12 ; 24) à disposer par rapport à l'arbre (16), l'arbre (16), avec l'au moins un élément (12 ; 24) disposé par rapport à l'arbre (16), est retiré du système de marquage (1).

12. Procédé de fabrication d'un système de mesure d'angles ou d'un composant d'un système de mesure d'angles, dans lequel le système de mesure d'angles ou le composant présente au moins un élément (12 ; 24) ayant une structure de préférence à effet optique, dans lequel la structure est appliquée sur l'élément (12 ; 24) selon un procédé selon l'une quelconque des revendications précédentes, dans lequel de préférence le système de mesure d'angles ou le composant présente une unité de construction (14) dotée d'un arbre (16) rotatif sur lequel sont disposés au moins un premier et un deuxième éléments (12 ; 24) qui sont réalisés de manière rotative l'un par rapport à l'autre, dans lequel le premier élément (12) est disposé de manière solidaire en rotation avec l'unité de construction (14) et dans lequel le deuxième élément (24) est disposé de manière solidaire en rotation avec l'arbre (16), sur lesquels la structure est appliquée à l'état disposé.

13. Procédé selon la revendication 12, dans lequel notamment les étapes suivantes sont exécutées pour la fabrication du système de mesure d'angles ou du composant :
i. fixation, de manière solidaire en rotation, du premier élément sur une unité de construction (14) et disposition de l'unité de construction (14) dans le système de marquage (1) ;
ii. pose d'un corps de mesure (22) sur l'arbre (16) de l'unité de construction (14) ;
iii. rotation de l'arbre (16) et détermination d'un point de rotation ou d'une position locale de l'arbre (16) par rapport à un point de référence, notamment un point zéro du système de marquage (1), au moyen du système de marquage (1) en utilisant le corps de mesure (22) ;
iv. retrait du corps de mesure (22) ;
v. application de la structure à effet optique sur le premier élément ;
vi. fixation, de manière solidaire en rotation, du deuxième élément sur l'arbre (16) ;
vii. application de la structure à effet optique sur le deuxième élément ;
viii. retrait de l'unité de construction (14) hors du système de marquage (1), l'unité de construction restant inchangée dans le système de marquage (1) pendant les étapes ii. à vii., de préférence les étapes vi. et vii. étant exécutées jusqu'à ce qu'une structure à effet optique soit appliquée sur tous les éléments (12 ; 24) à fixer sur l'unité de construction (14).

14. Procédé selon la revendication 13, dans lequel l'unité de construction est réalisée en tant qu'une unité d'entraînement dotée d'un arbre rotatif, ou est raccordable à une unité d'entraînement dotée d'un arbre rotatif.
